(19) **Europäisches Patentamt**

**European Patent Office**

**Office européen des brevets**

(11) **EP 0 934 548 B1**

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(21) Anmeldenummer: **97912203.3**

(22) Anmeldetag: **20.10.1997**

(51) Int Cl.⁷: **G02C 7/08**

(86) Internationale Anmeldenummer:
**PCT/EP97/05778**

(87) Internationale Veröffentlichungsnummer:
**WO 98/019204 (07.05.1998 Gazette 1998/18)**

(54) **BINOKULARE FERNROHRLUPENBRILLE**

BINOCULAR TELESCOPIC MAGNIFYING SPECTACLES

LUNETTE GROSSISSANTE TELESCOPIQUE BINOCULAIRE

(84) Benannte Vertragsstaaten:
**AT DE ES FR GB IT**

(30) Priorität: **25.10.1996 AT 187396**

(43) Veröffentlichungstag der Anmeldung:
**11.08.1999 Patentblatt 1999/32**

(73) Patentinhaber: **Steinhuber, Wolfdietrich**
**6130 Schwaz (AT)**

(72) Erfinder: **Steinhuber, Wolfdietrich**
**6130 Schwaz (AT)**

(74) Vertreter: **Hefel, Herbert, Dipl.-Ing.**
**Egelseestrasse 65a,**
**Postfach 61**
**6806 Feldkirch (AT)**

(56) Entgegenhaltungen:
**WO-A-91/17465** **WO-A-96/09566**
**DE-A- 4 004 248** **DE-U- 9 303 663**

**Beschreibung**

Die Erfindung bezieht sich auf eine binokulare Femrohrlupenbrille mit den Merkmalen des Oberbegriffes des Patentanspruches 1.

Solche Fernrohrlupenbrillen oder Nahgläser werden u.a. als Sehhilfen für Schwachsichtige und als Operationsbrillen eingesetzt. Dazu werden sie vom Benutzer zunächst auf seinen Augenabstand eingestellt. Soll die Fernrohrlupenbrille bei verschiedenen Arbeitsentfernungen verwendet werden, so bleibt die Pupillendistanz bei den verschiedenen Entfernungen auch bei ein und demselben Benutzer nicht konstant. Für unendlichen Abstand sind die Sehachsen der Augen parallel, für den Nahbereich stellen sie sich konvergent, wodurch einerseits der Winkel der Sehachsen verändert wird, andererseits die Pupillendistanz verringert wird, weiters ändert sich bei Konvergenz der Abstand der Augenpupillen vom Gerät (Hornhautscheitelabstand).

Bei bekannten Fernrohrlupenbrillen erfolgt eine teilweise Einstellung der genannten Bedingungen. Bei der bekannten Fernrohrlupenbrille nach DE 40 04 248 A1 erfolgt eine richtige Achsstellung auf einem Kreisbogen, dessen Mittelpunkt im Untersuchungsauge liegt, jedoch erfolgt keine Koppelung der Achsstellung mit der Entfernungseinstellung. Das heißt, der Anwender muß sich für eine bestimmte Entfernung die richtige Achsstellung bzw. für eine bestimmte Achsstellung die richtige Entfernung einstellen. Weiters muß die Achsstellung des rechten und des linken Tubus getrennt vorgenommen werden, was eine weitere Bedienungserschwerung bedeutet. Bei der bekannten Femrohrlupenbrille nach AT 000 307 U1 wird mittels Stellmotoren der Abstand der Tubusachsen auf die richtige Parallaxe entsprechend der Entfernung eingestellt, jedoch erfolgt diese Bewegung geradlinig, so daß sich die Gerätepupille mit zunehmender Konvergenz vom Auge entfernt, wodurch das einsehbare Gesichtsfeld wesentlich beschnitten wird, wenn das Gerät mit einem Stimreifen getragen wird. Bei der bekannten Fernrohrlupenbrille nach 98 782 B erfolgt die Achsstellung entlang einer Raumkurve, die durch ein äußeres, einseitig befestigtes Gestänge vorgegeben ist. Bei Konvergenz ändert sich dadurch der Gerätehorizont. Gleichermaßen muß zur Einhaltung des Hornhautabstandes der Horizont gekippt werden.

All den genannten und vorbekannten Fernrohrlupenbrillen ist gemeinsam, daß sie nicht wie ein Fernglas, bei dem nur Augenabstand und Entfernung eingestellt werden, bedient werden können, sondern zusätzliche, zeitaufwendige, komplizierte und den Anwender zum Teil überfordernde Einstellungen notwendig sind.

Aufgabe der Erfindung ist es, diese Nachteile zu vermeiden und die Einstellung der Fernrohrlupenbrille zu vereinfachen, was erfindungsgemäß durch jene Merkmale und Maßnahmen gelingt, die Inhalt und Gegenstand des kennzeichnenden Teiles des Patentanspruches 1 sind. Der Durchmesser des Auges beträgt bei Erwachsenen etwa 24 mm. Da die Schwenkachsen der beiden Fernrohroptiken in einem Abstand von der Okular-Austrittspupille liegen, der kleiner ist als der Augendurchmesser, liegen die Schwenkachsen jeweils innerhalb des Auges des Benutzers. Dadurch bleibt bei einer Änderung des Arbeitsabstandes und damit des Konvergenzwinkels die Einstellung auf die wechselnde Pupillendistanz des Benutzers im wesentlichen erhalten. Vorzugsweise sind die Schwenkachsen jeweils etwa einen halben Augendurchmesser von der Okular-Austrittspupille beabstandet, d.h. sie liegen etwa im Augenmittelpunkt bzw. Augendrehpunkt des Benutzers, wodurch die Einstellung auf den Augenabstand bei einer Veränderung des Arbeitsabstandes bestmöglich erhalten bleibt. Zweckmäßige Ausgestaltungen der Erfindung sind in den Unteransprüchen festgehalten.

Zur Veranschaulichung der Erfindung wird diese anhand der Zeichnung näher erläutert, ohne dadurch die Erfindung auf die gezeigten Ausführungsbeispiele einzuschränken. Es zeigen:

Fig. 1 eine schematische Darstellung der Fernrohrlupenbrille;
Fig. 2 die Schrägsicht einer ausgeführten Fernrohrlupenbrille;
Fig. 3 die Draufsicht auf die Fernrohrlupenbrille nach Abnahme des Gehäuses;
Fig. 4 die Frontansicht und
Fig. 5 die Untersicht;
Fig. 6 einen Bauteil mit einer Steuerkulisse;
Fig. 7 den Halter für das Fernrohr in Schrägsicht;
die Fig. 8 bis 9 den U-förmigen Formteil in Draufsicht, Ansicht und Seitensicht;
Fig. 11 die Draufsicht auf die Innenseite des einen Gehäuseteiles und
Fig. 12 dessen Ansicht; Fig. 13 eine weitere Schemazeichnung;
Fig.14 eine dazugehörende Schnittdarstellung (A - A, Fig. 13);

Die binokulare Fernrohrlupenbrille weist in herkömmlicher Weise linke und rechte Fernrohre 1 auf, welche jeweils ein Objektiv 2, ein Umkehrsystem bzw. Umkehrprisma 3 und ein Okular 4 beinhalten. Jedes der Fernrohre 1 definiert eine Okular-Austrittspupille 9, die das Bild einer Aperturblende darstellt und die einen Abstand von 10 mm bis 20 mm vom Okular 4 aufweist. Das Fernrohr 1 ist dabei so ausgelegt, daß die Hornhaut des Auges des Benutzers bei der Verwendung der Fernrohrlupenbrille etwa im Bereich der Okular-Austrittspupille 9 liegt.

Die Fernrohre 1 sind gegenüber einem Gehäuse 5 in einer Ebene verschwenkbar gelagert. Dazu sind kreisbogenförmige Führungsbahnen 6 vorgesehen, entlang denen jeweils ein ebenfalls kreisbogenförmiger Gleitschuh 7 verschiebbar geführt ist, welcher mit dem jeweiligen Fernrohr 1 verbunden ist. Die Kreismittelpunkte der Führungsbahnen 6 bilden die gedachten Schwenkachsen 8 der Fernrohre 1. Bei jeder Stellung der Gleitschuhe 7 in den Führungsbahnen 6 liegen die optischen Achsen 25 der Fernrohre 1 jeweils radial zu den Führungsbahnen 6. Die Schwenkachsen 8 kreuzen außerhalb der Fernrohre 1 deren optische Achsen 25, und zwar in einem Abstand d von der Okular-Austrittspupille 9, der kleiner ist als der Augendurchmesser D, der etwa 24 mm beträgt. Dadurch liegen die Schwenkachsen 8 innerhalb der Augen 10 des Benutzers. Vorteilhafterweise liegen die Schwenkachsen zwischen 5 mm und 20 mm von der Okular-Austrittspupille 9 beabstandet.

Bei einer Konvergenzstellung der Augen 10 um einen Konvergenzwinkel 11 drehen sich die Augen 10 um einen Drehpunkt, der etwa 13,5 mm von der Hornhaut beabstandet ist. Dadurch verringert sich die effektive Pupillendistanz bei zunehmender Konvergenzstellung der Augen. Die Fernrohrlupenbrille folgt nun dieser Verringerung der Pupillendistanz bei Vergrößerung des Konvergenzwinkels 11 weitgehend, da die gedachten Schwenkachsen 8 der Fernrohre 1 im Inneren der Augen 10 des Benutzers liegen (in der Figur sind zur Übersichtlichkeit die Okular-Austrittspupillen 9 nur für die parallel eingestellten Fernrohre gezeigt). Die geringste Abweichung ergibt sich, wenn die Drehpunkte der Augen und die Schwenkachsen 8 möglichst zusammenfallen, daher beträgt in einer bevorzugten Ausführungsform der Erfindung der Abstand zwischen Okular-Austrittspupille 9 und Schwenkachse 8 etwa 13 mm.

Die Voreinstellung der Pupillendistanz, beispielsweise bei einer Fokussierung auf unendlich, erfolgt über ein Stellrad 12. Dieses besitzt Muttern, die mit Zugschrauben 13 mit gegenläufigen Gewinden zusammenwirken, welche mit den Führungsbahnen 6 oder mit diesen verbundenen Teilen verbunden sind. Durch diese Pupillardistanzeinstellvorrichtung sind also die Führungsbahnen 6 quer zur Mittelebene 26 des Gehäuses 5 verschiebbar, wobei ihr Abstand voneinander einstellbar ist.

Zur Konvergenzeinstellung der Fernrohre 1 ist ein Stellrad 14 vorgesehen. Eine Verdrehung dieses Stellrades 14 wird über Wellen 15 auf am freien Ende dieser Wellen 15 angeordnete Exzenter 16 übertragen, welche an ihren Vorderseiten Schraubenflächen aufweisen, an denen jeweils ein mit dem jeweiligen Fernrohr 1 starr verbundenes Teil 17 anliegt. Dieses Teil 17 wird von Schraubenfedern 18, die sich an Endflächen der Führungsbahnen 6 abstützen und gegen die Gleitschuhe 7 drücken, gegen die Schraubenfläche gedrückt. An seiner Rückseite stützt sich der jeweilige Exzenter 16 an einem mit der Führungsbahn 6 starr verbundenen Teil 19 ab. Zur Anpassung an die unterschiedlichen Voreinstellungen des Augenabstandes über das erste Stellrad 12 weisen die Wellen 15 jeweils ein Längenausgleichsstück 20 auf, beispielsweise in Form einer Profilwelle, welche gegenüber einer Hülse zwar nicht verdrehbar, aber in Axialrichtung verschiebbar ist.

Über das Stellrad 14 sind die Verschwenkungen der beiden Fernrohre gekoppelt, so daß sie jeweils denselben Konvergenzwinkel 11 einnehmen.

Es ist weiters eine Kopplungsvorrichtung zur Koppelung der Konvergenzeinstellung mit der Fokussierung bzw. der Entfernungseinstellung der beiden Fernrohre 1 vorgesehen. Diese Kopplungsvorrichtung weist mit den Führungsbahnen 6 starr verbundene Steuerteile 21 auf, an deren dem Okular zugewandter Seite jeweils eine Steuerkurve 22 vorgesehen ist. An der Steuerkurve 22 liegt das eine Ende eines Steuerstiftes 23 an, dessen anderes Ende mit dem entlang der optischen Achse 25 verschiebbar gelagerten Objektiv 2 verbunden ist. Bei einer Verschwenkung der Fernrohre 1 gleiten die Steuerstifte 23 über die Steuerkurven 22 und verändern dadurch die axiale Lage der Objektive 2 derart, daß bei unterschiedlichen Konvergenzwinkeln 11 die Fokussierung erhalten bleibt.

Es wäre in einem anderen Ausführungsbeispiel der Erfindung andererseits auch möglich, eine demgegenüber umgekehrte Steuerung vorzusehen, d.h. bei einer Änderung der Fokussierung den Konvergenzwinkel zu verändern.

Im schematisch gezeigten Ausführungsbeispiel ist eine hinter dem Objektiv 2 in den Strahlengang einschwenkbare Linse 24, vorzugsweise eine Pluslinse, vorgesehen. Beim Einschwenken dieser Linse 24 sollte gleichzeitig ein Längenausgleichsstück zur Veränderung der Länge des Steuerstiftes 23 eingeschwenkt werden, um die Fokussierung zu erhalten. Durch diese einschwenkbare Linse 24 kann die Vergrößerung bei konstantem Arbeitsabstand vorzugsweise mit Hilfe des Längenausgleichsstückes ohne Entfernungsnachjustierung verändert werden.

Ein weiteres bevorzugtes Ausführungsbeispiel der Erfindung besteht darin, daß die Umkehrprismen 3 ebenso wie die Objektive 2 axial verschiebbar gelagert sind und ihre Position mit dem Konvergenzwinkel 11 gekoppelt ist. Im einfachsten Fall sind die Umkehrprismen 3 dazu starr mit den Objektiven 2 verbunden. Es könnten aber auch separate Steuerkurven und -stifte vorgesehen sein. Durch diese Koppelung der axialen Position der Umkehrprismen 3 mit dem Konvergenzwinkel 11 kann der Abstand der Umkehrprismen vom Zwischenbild eingestellt werden und daher auch bei einer kleineren Baugröße der Umkehrprismen ein möglichst großes Gesichtsfeld erreicht werden.

Die Optimierung der gegenständlichen Forderungen zwischen einem maximalen Bildfeld und einer brauchbaren Gerätegröße wird dadurch gelöst, daß die Okulare der erfindungsgemäßen Fernrohrlupenbrille bevorzugterweise eine im wesentlichen rechteckige Fläche im Format eines Fernsehbildes (Längen-Breiten-Verhältnis 4 : 3) aufweisen. Dazu werden von einem kreisrunden Okular durch zwei parallele Schnitte seitliche Kreisteile abgeschnitten bzw, abgeschliffen. Dies ist deshalb günstig, da das Sehen eines rechteckigen querformatigen Bildes als annähernd gleich groß empfunden wird wie das Sehen eines kreisrunden Bildes mit dem Durchmesser der großen Seite des Rechteckes. Die rechteckige Beschleifung der Okularlinsen führt zudem zu einer Gewichtsersparnis. Weiters ist es bei einer solchen Ausführungsform sinnvoll, wenn zumindest ein Teil der Gesichtsfeldblenden oder Aperturblenden, vorzugsweise alle, eine rechteckige Form vorzugsweise im Längen-Breiten-Verhältnis 4 : 3 aufweisen.

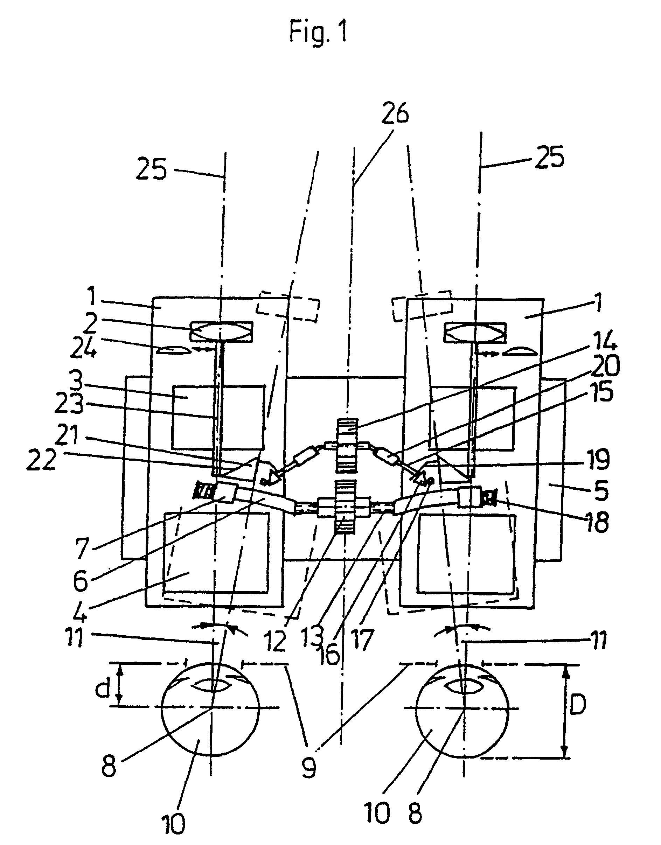

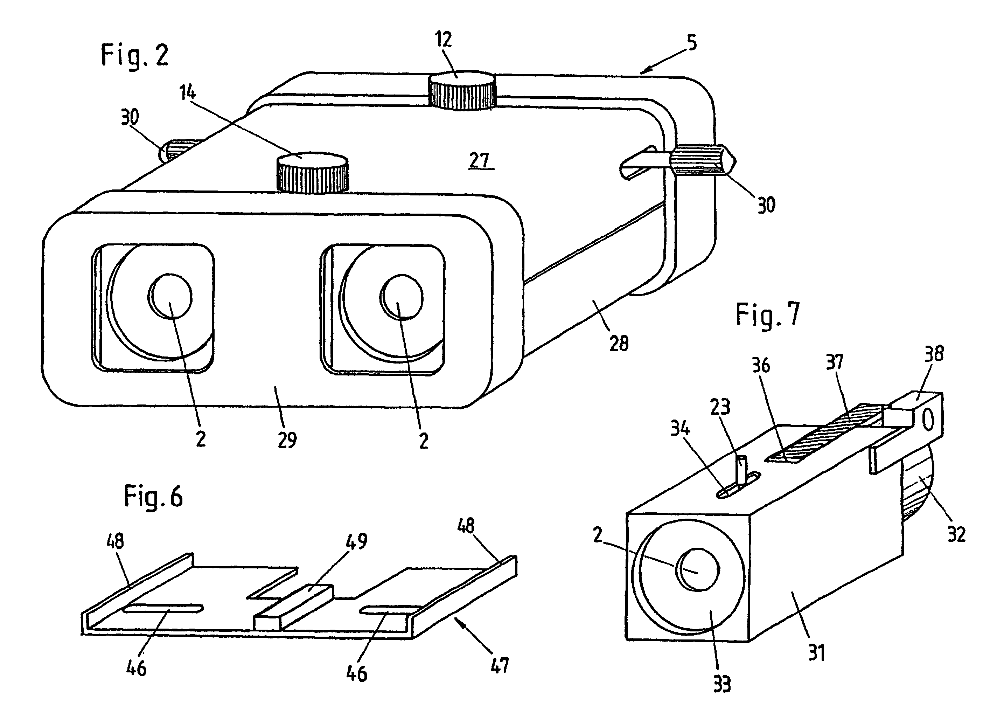

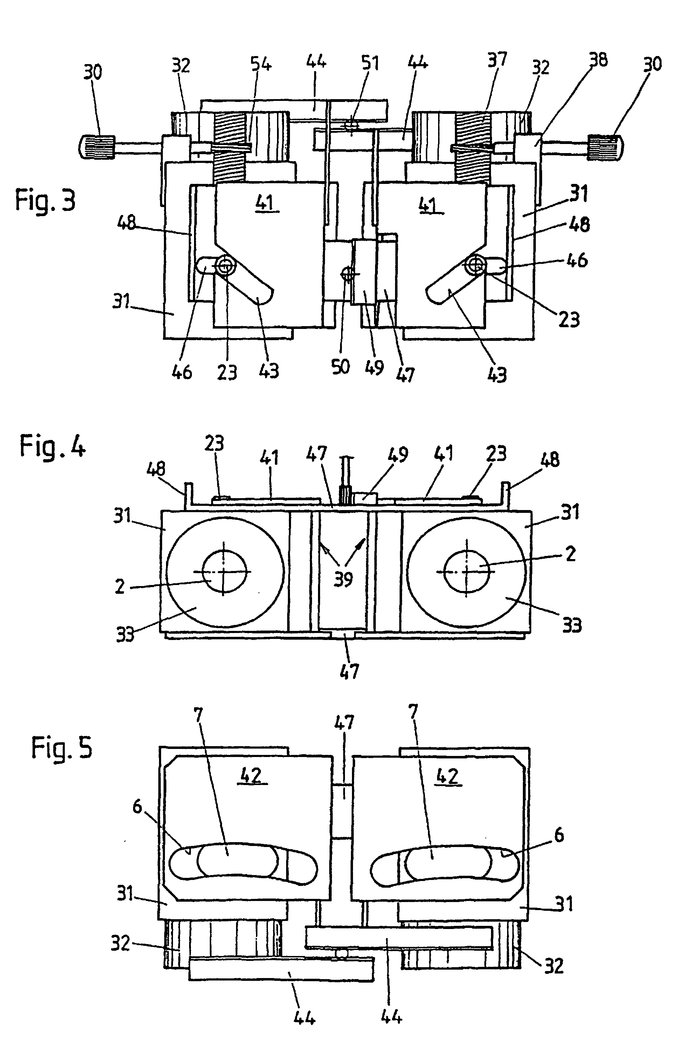

Anhand der Fig. 2 bis 12 wird nun im folgenden ein konkretes Ausführungsbeispiel der vorstehend geschilderten Fernrohrlupenbrille beschrieben, wobei die in der schematischen Darstellung nach Fig. 1 benannten Teile hier mit denselben Bezugsziffern versehen sind. Diese Fernrohrlupenbrille besitzt ein Gehäuse 5 mit einer oberen und einer unteren Gehäuseschale 27 und 28. Die Frontseite 29 läßt die Objektive 2 erkennen. Seitlich angeordnete Stellschrauben 30 dienen der Dioptrienkorrektur. Mit dem Stellrad 12 wird die Pupillendistanz eingestellt und mit dem Stellrad 14 die Konvergenz. Wird das Gehäuse 5 entfernt, so zeigt sich der innere Aufbau der Fernrohrlupenbrille gemäß den Fig. 3 bis 5:

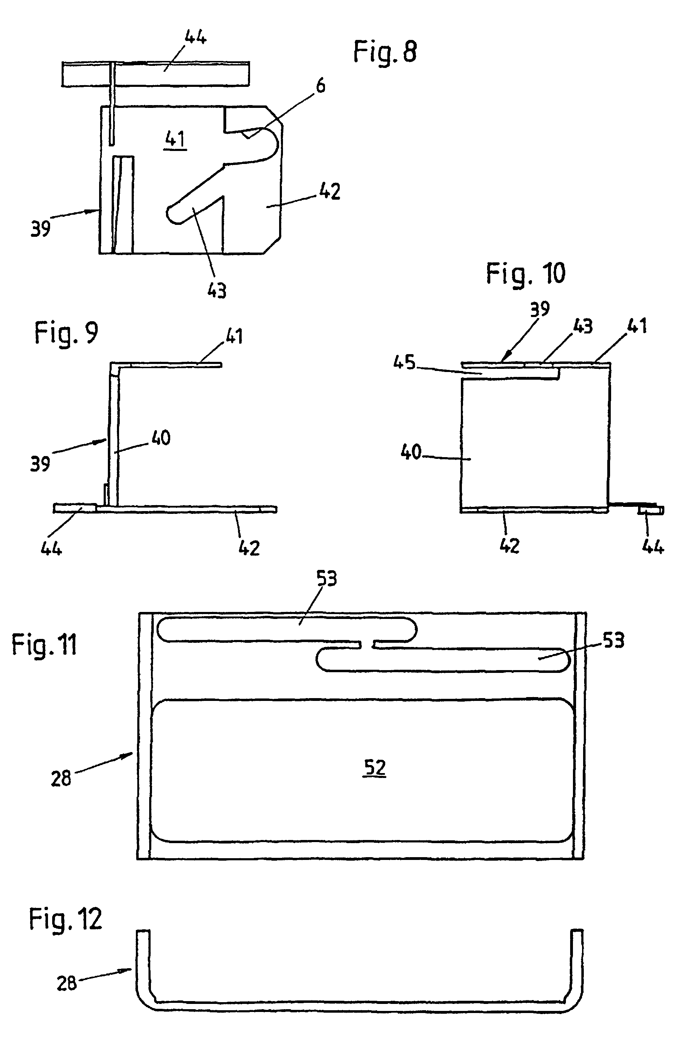

In quaderförmigen Haltern 31 sind Tuben 32 und 33 in fluchtender Anordnung axial verschiebbar gelagert, wobei der eine Tubus 32 das jeweilige Okular 4 aufnimmt und der andere Tubus 33 das Objektiv 2 und das Umkehrprisma 3. An der Oberseite des Halters 31 ist eine Langlochausnehmung 34 ausgespart, durch welche ein Steuerstift 23 ragt, der mit seinem anderen Ende mit dem Tubus 33 des Objektives 2 verbunden ist. Ferner ist an der Oberseite des Halters 31 ein einseitig offener Ausschnitt 36, der sich axial erstreckt und in dem eine Zahnstange 37 liegt, die mit dem Tubus 32 des Okulars 4 fest verbunden ist. Ein einseitig angeflanschtes Lager 38 dient der Aufnahme der Stellschraube 30. An der Unterseite des Halters 31 - in Fig. 7 nicht sichtbar - ist der Gleitschuh 7 festgelegt. Die beiden Tuben 32 und 33 mit den optischen Linsen bilden die Fernrohre 1.

Jeder dieser Halter 31 ist von einem U-förmigen Formteil 39 aufgenommen, der in den Fig, 8 bis 10 in verschiedenen Ansichten dargestellt ist. Dieser Formteil 39 besitzt einen vertikalen Steg 40, eine obere Wange 41 und eine untere Wange 42. In der unteren Wange 42 ist die kreisbogenförmige Führungsbahn 6 ausgespart; in der oberen Wange 41 eine gegenüber der Mittelebene 26 schräg verlaufende Steuerkulisse 43. An der unteren Wange 42 ist noch jeweils eine Zahnstange 44 festgelegt. Zwischen dem vertikalen Steg 40 und der oberen Wange 41 ist ein Schlitz 45 ausgespart. Der Aufbau der beiden hier verwendeten U-förmigen Formteile ist an sich ident, jedoch spiegelverkehrt, der einzige Unterschied liegt darin, daß die Abstände der jeweiligen Zahnstangen 44 von den Formteilen 39 unterschiedlich ist, so daß bei funktionsgerechtem Einbau dieser Halter 31 die beiden Zahnstangen voneinander distanziert liegen und im Zwischenraum zwischen den beiden Zahnstangen ein Ritzel 51 liegt (Fig. 3).

Der vorstehend erwähnte Schlitz 45 im Formteil 39 nimmt eine zweite Steuerkulisse 46 auf, die in einem streifenförmigen Bauteil 47 (Fig. 6) ausgespart ist und die aus zwei gerade verlaufenden Langlochausnehmungen besteht. Dieser streifenförmige Bauteil 47 besitzt an seinen Schmalseiten hochgebogene Ränder 48, und in seiner Mitte ist eine Zahnleiste 49 festgelegt. Die Steuerkulisse 46 erstreckt sich geradlinig und rechtwinkelig zur Zahnleiste 49. Mit der Zahnleiste 49 kämmt ein Ritzel 50, das mit dem Stellrad 14 verbunden ist. Das bereits erwähnte Ritzel 51, das zwischen den beiden Zahnstangen 44 der Formteile 39 liegt, ist mit dem Stellrad 12 verbunden.

Sind die vorstehend einzeln beschriebenen Bauteile in das Gehäuse 5 eingebaut, so liegen die unteren Wangen 42 der U-förmigen Formteile 39 in der nutenartigen, als Führung dienenden Vertiefung 52 der einen Gehäuseschale 28 (Fig. 11), wobei ihre Zahnstangen 44 einander zugewandt sind. Diese an den Formteilen 39 festgelegten Zahnstangen 44 sind von den Nuten 53 in der Gehäuseschale 28 aufgenommen. Unterhalb der oberen Wange 41 der Formteile 39 und auf der Oberseite der Halter 31 liegt der streifenförmige Bauteil 47 auf, wobei sich die Steuerkulissen 43 und 46 kreuzen und im Kreuzungspunkt dieser Steuerkulissen der Steuerstift 23 liegt, der mit dem das Objektiv 2 aufweisenden Tubus 33 der jeweiligen Fernrohre 1 verbunden ist. Die hochgebogenen Ränder 48 des streifenförmigen Bauteiles 47 mit der Steuerkulisse 46 ragen in Führungsnuten, die an der Innenseite der oberen Gehäuseschale 27 eingearbeitet, hier jedoch nicht dargestellt sind. In den Darstellungen nach den Fig. 3 bis 5 sind die optischen Achsen 25 der Fernrohre 1 parallel zueinander ausgerichtet. Zur Einstellung des Abstandes dieser beiden optischen Achsen 25 wird das Stellrad 12 und mit diesem das zwischen den Zahnstangen 44 liegende Ritzel 51 gedreht mit der Folge, daß die U-förmigen Formteile 39 und die von ihnen aufgenommenen Halter 31 mit den Fernrohren 1 in der nutenartigen und als Führung dienenden Vertiefung 52 der einen Gehäuseschale 28 relativ zueinander verschoben werden, wobei diese Formteile 39 je nach Drehrichtung des Ritzels 51 sich gegeneinander- oder auseinanderbewegen. Die Steuerkulissen 43 und 46 behalten bei dieser Verstellung ihre relative Lage zueinander unverändert bei.

Mit den Stellschrauben 30 wird der Dioptrienausgleich eingestellt in Abhängigkeit von den Seheigenschaften der Augen des Benutzers. Durch Drehen dieser Stellschraube 30 wird jeweils der Tubus 32 mit dem Okular 4 gegenüber dem Tubus 33 mit dem Objektiv 2 axial verstellt.

Die Konvergenz der optischen Achsen 25 wird mit dem Stellrad 14 eingestellt. Durch Drehen dieses Stellrades 14, das gegenüber dem Gehäuse 5 ortsfest gelagert ist, wird das Ritzel 50 verdreht und dadurch die Zahnleiste 49 in der Mittelebene 26 verschoben, wobei dieser Verschiebung der streifenförmige Bauteil 47 mit seinen am Gehäuse 5 geführten Rändern 48 der Steuerkulisse 46 folgt. Dadurch wird der Steuerstift 23 und mit ihm der Tubus 33 mit dem Objektiv 2 des Halters 31 axial verschoben, und gleichzeitig verschiebt sich dieser Steuerstift 23 entlang der schräg verlaufenden Steuerkulisse 43 des ortsfesten Formteiles 39, so daß dadurch der Halter 31 verschwenkt wird und sich über seinen Gleitschuh 7 entlang der kreisbogenförmigen Führungsbahn 6 bewegt.

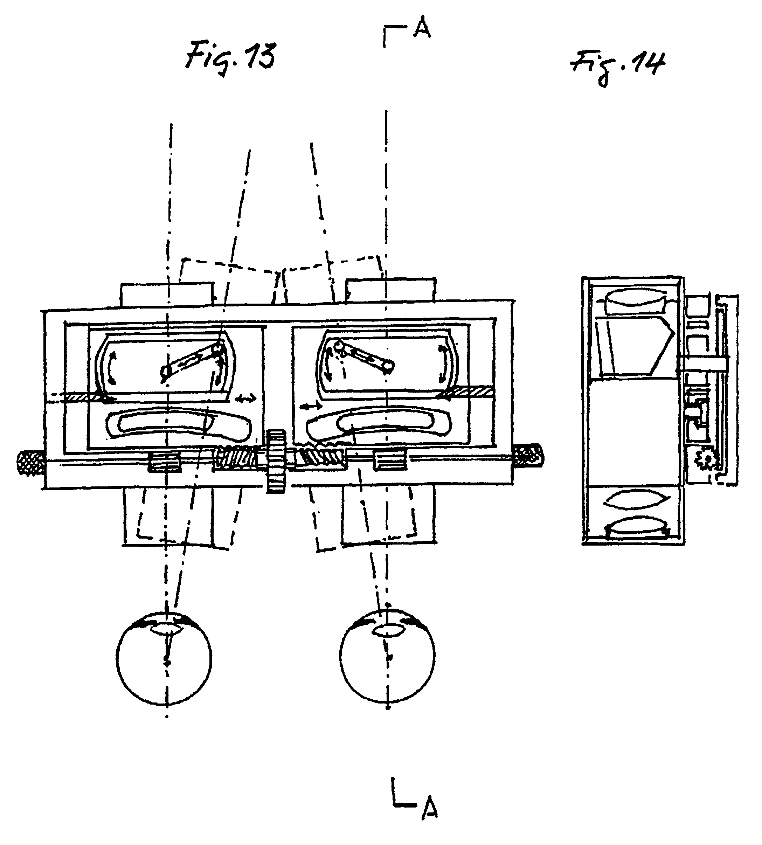

In einer weiteren Ausgestaltung der Erfindung ist die Kulisse 43 in ihrer Ebene verschwenkbar gelagert, so daß ihre Schrägstellung gegenüber der Mittelebene 26 veränderbar ist. Zu diesem Zweck ist diese Steuerkulisse in einer Kreisscheibe vorgesehen, die ihrerseits in oder auf der oberen Wange 41 des Formteiles 39 verdrehbar ist Dadurch können bei größeren Pupillendistanzen die optischen Achsen 25 der Fernrohre 1 gegenüber der Mittelebene 26 steiler angestellt werden (Fig. 13 u. 14).

Aus der vorstehenden Schilderung der erfindungsgemäßen Femrohrlupenbrille zeigt sich, daß zunächst die Pupillardistanz des Benutzers eingestellt wird und dann die Entfernung. Die Achsstellung ist gekoppelt mit der Entfernungseinstellung auf der kreisbogenförmigen Führungsbahn 6, so daß bei Konvergenz der Geräte - Augen - Abstand nicht verändert wird. Der Benutzer kann ohne nachzujustieren nahe und ferne Abstände rasch einstellen. Die Voraussetzung für die Anwendbarkeit einer einheitlichen Gerätegröße für verschiedene Personen mit unterschiedlichen Augenabständen ist die Koppelung der Konvergenzeinstellung mit der Pupillendistanzeinstellung. Bei Personen mit großer Pupillendistanz muß im Nahbereich eine stärkere Achsneigung vorliegen, um denselben Nahpunkt scharf zu sehen gegenüber Personen mit kleinerer Pupillendistanz. Weiters ermöglicht die Änderung der Schrägstellung der einen Steuerkulisse eine einfache Anpassung an Wechseloptik.

Die Einstellung der Sehachsen beider Augäpfel (= Konvergenz) erfolgt in Abhängigkeit von der Entfernungseinstellung (=Akkomodation) und ist unwillkürlich vom Gehirn gesteuert. Das Ziel der neuen Fernrohrlupenbrille ist eine Unterstützung des normalen Sehaktes, wie er auch ohne Hilfsmittel stattfindet. Dabei wird die entfernungsabhängige Akkomodation, ohne die eine Konvergenzstellung der Augen nur unvollständig oder überhaupt nicht auslösbar ist, in die Steuerkurve eingerechnet. Die Steuerkurve errechnet sich aus der Gegenstands-Weite-abhängigen Vergenz (=Neigung einer Sehachse) und der Objektiv-Brennweiten-abhängigen Bildweite. Wird die Akkomodation berücksichtigt, so muß die Bildweiteneinstellung (durch Objektivvorschub) mittels der Steuerkurve um den Betrag der Akkomodationsleistung des Auges verringert werden. Dieser Betrag errechnet sich aus der Brennweite des Okulars in Dioptrien plus Akkomodationsleistung des Auges für die entsprechende Entfernung in Dioptrien.

Beispiel:

| Gegenstandsweite | 2 m |
|---|---|
| Objektivbrennweite | 50 mm |
| Bildweite | 51,28 mm |
| Okularbrennweite | 50D=20 mm |
| Akkomodation | 0,5D |
| Gesamtwirkung (Okular + Akkomodation) | 50,5D = 19,80 |
| Reduktion | 0,2 mm |

| Formel und Tabelle für die Steuerkurve der Prismenlupenbrille mit Vario-Konvergenz-Entfernungs-Einstellung | | | | |
|---|---|---|---|---|
| Gegenstandsweite (a) als Funktion des Konvergenzwinkels $a = \dfrac{PD}{2 \tan(\propto)}$ | | | | |
| Tabelle PD=64 | | | | |
| a | ..... | 0° | = | ∞ |
| | | 1° | = | 1833,3mm |
| | | 2° | = | 916,4mm |
| | | 3° | = | 610,0mm |
| | | 4° | = | 457,6mm |
| | | 5° | = | 365,8mm |
| | | 6° | = | 304,5mm |
| | | 7° | = | 260,6mm |
| | | 7,3° | = | 250,0mm |
| Bildweite (a') als Funktion des Konvergenzwinkels $a' = \dfrac{a \cdot f}{a - f}$ | | | | |

(fortgesetzt)

| Formel und Tabelle für die Steuerkurve der Prismenlupenbrille mit Vario-Konvergenz-Entfernungs-Einstellung | | | | |
|---|---|---|---|---|
| Tabelle PD=64 f=34,6 (=50,33+9D) | | | | |
| a' | ..... | 0° | = | 34,6mm |
| | | 1° | = | 35,2mm |
| | | 2° | = | 35,9mm |
| | | 3° | = | 36,7mm |
| | | 4° | = | 37,4mm |
| | | 5° | = | 38,2mm |
| | | 6° | = | 39,0mm |
| | | 7° | = | 39,8mm |
| | | 7,2° | = | 39,7mm |

Legende zu den Hinweisziffern:

| | |
|---|---|
| 1 | Fernrohr |
| 2 | Objektiv |
| 3 | Umkehrprisma |
| 4 | Okular |
| 5 | Gehäuse |
| 6 | Führungsbahn |
| 7 | Gleitschuh |
| 8 | Schwenkachse |
| 9 | Okular-Austrittspupille |
| 10 | Auge |
| 11 | Konvergenzwinkel |
| 12 | Stellrad |
| 13 | Zugschraube |
| 14 | Stellrad |
| 15 | Welle |
| 16 | Exzenter |
| 17 | Teil |
| 18 | Schraubenfeder |
| 19 | Teil |
| 20 | Längenausgleichsstück |
| 21 | Steuerteil |
| 22 | Steuerkurve |
| 23 | Steuerstift |
| 24 | Linse |
| 25 | optische Achse |
| 26 | Mittelebene |
| 27 | Gehäuseschale |
| 28 | Gehäuseschale |
| 29 | Frontseite |
| 30 | Stellschraube |
| 31 | Halter |
| 32 | Tubus |
| 33 | Tubus |
| 34 | Langlochausnehmung |
| 35 | |
| 36 | Ausschnitt |
| 37 | Zahnstange |

38 Lager
39 Formteil
40 vertikaler Steg
41 obere Wange
42 untere Wange
43 schräg verlaufende Steuerkulisse
44 Zahnstange
45 Schlitz
46 Steuerkulisse
47 streifenförmiger Bauteil
48 Rand
49 Zahnleiste
50 Ritzel
51 Ritzel
52 nutenartige Vertiefung
53 Nut
54 Ritzel

**Patentansprüche**

1. Binokulare Fernrohrlupenbrille, deren beide Femrohre (1) jeweils ein Objektiv (2), gegebenenfalls ein Umkehrprisma (3), und ein Okular (4) aufweisen und die um parallele Schwenkachsen in einer gemeinsamen Ebene verschwenkbar gelagert sind, wobei die beiden gedachten Schwenkachsen (8). der Fernrohre (1) jeweils außerhalb der Femrohre (1) und auf der von den Fernrohren (1) abgewandten Seite der Okular-Austrittspupille (9) In einem Abstand (d) von der Okular-Austrittspupille (9) liegen, der kleiner ist als der Augendurchmesser (D), und die Schwenkachsen (8) der Femrohre (1) jeweils deren optische Achsen (25) kreuzen und die beiden Fernrohre (1) jeweils auf kreisbogenförmigen Führungsbahnen (6) verschiebbar sind, deren Kreismittelpunkte mit den Schwenkachsen (8) der Femrohre (1) zusammenfallen, wobei die optischen Achsen (25) der Femrohre (1) jeweils radial zu den Führungsbahnen (6) liegen, **dadurch gekennzeichnet, daß** die Verschwenkungen der beiden Femrohre (1) um ihre Schwenkachsen (8) gekoppelt sind und die beiden Fernrohre (1) jeweils den gleichen Konvergenzwinkel einnehmen und daß die Konvergenzeinstellvorrichtung zur gekoppelten Verschwenkung der beiden Femrohre (1) ein erstes Stellrad (14) aufweist, welches mit einem Exzenter (16) verbunden ist, der die Fernrohre entlang der Führungsbahnen (6) verschiebt, und eine Kopplungsvorrichtung zur Koppelung der Einstellung des Konvergenzwinkels (11) der Femrohre (1) mit der Entfernungseinstellung derselben vorgesehen ist, wobei für jedes Femrohr (1) mindestens eine Steuerkurve (22) vorgesehen ist, an der ein in Richtung der optischen Achse (25) in Abhängigkeit vom Konvergenzwinkel (11) der Fernrohre (1) verschiebbarer Steuerstift (23) anliegt und der Steuerstift (23) mit dem entlang der optischen Achse (25) verschiebbaren Objektiv (2) des jeweiligen Fernrohres (1) verbunden ist.

2. Binokulare Femrohrlupenbrille nach Anspruch 1, **dadurch gekennzeichnet, daß** mit den Fernrohren (1) Gleitschuhe (7) verbunden sind, welche entlang den Führungsbahnen (6) verschiebbar sind.

3. Binokulare Femrohrlupenbrille nach Anspruch 1 oder Anspruch 2, **dadurch gekennzeichnet, daß** eine Pupillardistanzeinstellvorrichtung zur Verstellung des Abstandes der beiden Schwenkachsen der Femrohre (1) vorgesehen ist, die ein zweites Stellrad (12) aufweist, welches mit Muttern verbunden ist, in denen mit den Führungsbahnen (6) starr verbundene Zugschrauben (13) mit gegenläufigen Gewinden gelagert sind.

4. Binokulare Fernrohrlupenbrille nach einem der Ansprüche 1 bis 3, **dadurch gekennzeichnet, daß** die Objektiv (2) und Okular (4) enthaltenden Femrohre (1) verschiebbar in einem vorzugsweise quaderförmigen Halter (31) angeordnet sind, der eine in Achsrichtung des aufgenommenen Femrohres (1) verlaufende Langlochausnehmung (34) aufweist, in welcher ein Steuerstift (23) vorgesehen ist, der mit einem das Objektiv (2) aufweisenden Tubus (33) verbunden ist, und dieser Steuerstift (23) in zwei Steuerkulissen (43, 46) ragt, von welchen die eine Steuerkulisse (46) in der Mittelebene (26) der Fernrohrlupenbrille und die andere Steuerkulisse (43) rechtwinkelig dazu verschiebbar gelagert sind, wobei die beiden Steuerkulissen (43, 46) sich kreuzen.

5. Binokulare Fernrohrlupenbrille nach Anspruch 4, **dadurch gekennzeichnet, daß** die entlang der Mittelebene (26) der Fernrohrlupenbrille verschiebbare Steuerkulisse (46) rechtwinkelig zu dieser Mittelebene (26) verläuft und die beiden anderen Steuerkulissen (43), die den beiden Femrohren (1) zugeteilt sind, von außen gegen die Mittelebene (26) konvergieren.

6. Binokulare Fernrohrlupenbrille nach Anspruch 4 oder 5, **dadurch gekennzeichnet, daß** die gegen die Mittelebene (26) konvergierend verlaufenden Steuerkulissen (43) in ihrer Ebene verschwenkbar sind zur Veränderung ihrer Winkellage gegenüber der Mittelebene (26).

7. Binokulare Fernrohrlupenbrille nach Anspruch 4, **dadurch gekennzeichnet, daß** der Gleitschuh (7) an der der Langlochausnehmung (34) abgewandten Seite des Halters (31) angeordnet ist.

8. Binokulare Fernrohrlupenbrille nach einem der Ansprüche 1 bis 7, **dadurch gekennzeichnet, daß** die Halter (31) jeweils von einem U-förmigen Formteil (39) aufgenommen sind, wobei diese Formteile (39) mit ihren die Wangen (41, 42) dieser Formteile verbindenden vertikalen Stegen (40) einander zugewandt sind und in der jeweils oberen Wange (41) die eine konvergierend verlaufende Steuerkulisse (43) vorgesehen ist und in der unteren Wange (42) die kreisbogenförmige Führungsbahn (6), in welcher der Gleitschuh (7) des Halters (31) liegt.

9. Binokulare Fernrohrlupenbrille nach Anspruch 8, **dadurch gekennzeichnet, daß** die die kreisbogenförmige Führungsbahn (6) aufweisenden Wangen (42) der jeweiligen U-förmigen Formteile (39) in einer nutartigen, rechtwinkelig zur Mittelebene (26) verlaufenden, als Führung dienenden Vertiefung (52) einer die Femrohrlupenbrille aufnehmenden Gehäuseschale (28) liegen.

10. Binokulare Fernrohrlupenbrille nach Anspruch 8 oder 9, **dadurch gekennzeichnet, daß** mit den jeweiligen U-förmigen Formteilen (39) parallel zueinander und rechtwinkelig zur Mittelebene (26) liegende Zahnstangen (44) verbunden sind, zwischen welchen ein Zahnritzel (51) liegt.

11. Binokulare Femrohrlupenbrille nach Anspruch 4, **dadurch gekennzeichnet, daß** die in der Mittelebene (26) verschiebbare und rechtwinkelig zu dieser verlaufende Steuerkulisse (46) in einem streifenförmigen Bauteil (47) vorgesehen ist, der in seinem Mittelteil eine in Verschieberichtung der Steuerkulisse (46) verlaufende Zahnleiste (49) aufweist, die mit einem verdrehbaren, in einem Gehäuseteil gelagerten Zahnritzel (50) kämmt, und die seitlichen, parallel zur Zahnleiste (49) verlaufenden Ränder (48) des streifenförmigen Bauteiles (47) hochgebogen sind und von in einem Gehäuseteil (27) ausgesparten Führungsnuten aufgenommen sind.

12. Binokulare Femrohrlupenbrille nach Anspruch 1, **dadurch gekennzeichnet, daß** das Objektiv (2) und gegebenenfalls ein Umkehrprisma (3) des Femrohres (1) einerseits und das Okular(4) andererseits in getrennten, vom Halter (31) aufgenommenen Tuben (32, 33) angeordnet sind.

13. Binokulare Fernrohrlupenbrille nach Anspruch 12, **dadurch gekennzeichnet, daß** die die Okulare (4) aufweisenden Tuben (32) mittels eines Zahntriebes gegenüber dem Halter (31) verschiebbar sind.

14. Binokulare Femrohrlupenbrille nach Anspruch 13, **dadurch gekennzeichnet, daß** der das Okular (4) aufweisende Tubus (32) an seiner Außenseite eine In Achsrichtung des Tubus (32) verlaufende und in einer schlitzartigen Ausnehmung (36) des Halters (31) liegende Zahnstange (37) aufweist, die mit einem am Halter (31) drehbar gelagerten Ritzel (54) kämmt.

15. Binokulare Fernrohrlupenbrille nach Anspruch 1, **dadurch gekennzeichnet, daß** die Schwenkachsen (8) der Fernrohre (1) einen Abstand (d) zwischen 5 und 20 mm von der Okular-Austrittspupille (9) aufweisen.

16. Binokulare Femrohrlupenbrille nach Anspruch 15, **dadurch gekennzeichnet, daß** die Schwenkachsen (8) der Fernrohre (1) einen Abstand (d) von etwa einem halben Augendurchmesser (D), vorzugsweise 13 mm, von der Okular-Austrittspupille (9) aufweisen.

17. Binokulare Fernrohrlupenbrille nach Anspruch 15, **dadurch gekennzeichnet, daß** die Okular-Austrittspupille (9) um 10 mm bis 20 mm außerhalb des Okulars (4) der jeweiligen Femrohre (1) liegt.

18. Binokulare Femrohrlupenbrille nach einem der Ansprüche 1 bis 17, **dadurch gekennzeichnet, daß** zwischen Objektiv (2) und Umkehrprisma (3) eine Linse (24), vorzugsweise eine Pluslinse in den Strahlengang einschwenkbar ist.

**19.** Binokulare Femrohrlupenbrille nach Anspruch 18, **dadurch gekennzeichnet, daß** gekoppelt mit der Linse (24) ein Brennweitenausgleichsstück zur Verstellung der Position des Objektivs (2) entlang der optischen Achse'derart, daß die Entfernung der Femrohre (1) gleich eingestellt bleibt, einschwenkbar ist.

**20.** Binokulare Femrohrlupenbrille nach einem der Ansprüche 1 bis 19, **dadurch gekennzeichnet, daß** die Umkehrprismen (3) axial verschiebbar gelagert sind und eine Kopplungseinrichtung zur Koppelung der axialen Position der Umkehrprismen (3) mit dem Konvergenzwinkel (11) bzw. der Entfernungseinstellung vorgesehen ist.

**21.** Binokulare Fernrohrlupenbrille nach Anspruch 20, **dadurch gekennzeichnet, daß** die Kopplungseinrichtung eine starre Verbindung zwischen Objektiv (2) und Umkehrprisma (3) ist.

**22.** Binokulare Femrohrlupenbrille nach einem der Ansprüche 1 bis 20, **dadurch gekennzeichnet, daß** die Okulare (4) einen im wesentlichen rechteckigen Querschnitt aufweisen, vorzugsweise im Längen-Breiten-Verhältnis von 4 : 3.

**23.** Binokulare Femrohrlupenbrille nach Anspruch 22, **dadurch gekennzeichnet, daß** zumindest ein Teil der Gesichtsfeldblenden oder Aperturblenden, vorzugsweise alle, eine rechteckige Form, vorzugsweise im Längen-Breiten-Verhältnis 4 : 3 aufweisen.

**Claims**

**1.** Binocular telescopic magnifying spectacles, both telescopes (1) of which each have an objective (2), optionally an inverting prism (3), and an ocular (4), and which are mounted for pivoting about parallel pivot axes in a common plane, wherein the two imaginary pivot axes (8) of the telescopes (1) each lie outside the telescopes (1) and, on the side of the ocular exit pupil (9) directed away from the telescopes (1), at a distance (d) from the ocular exit pupil (9) which is smaller than the eye diameter (D), and the pivot axes (8) of the telescopes (1) each cross optical axes (25) of the said telescopes, and the two telescopes (1) are each displaceable on arcuate guideways (6), the arc centres of which coincide with the pivot axes (8) of the telescopes (1), wherein the optical axes (25) of the telescopes (1) each extend radially in relation to the guideways (6), **characterised in that** the pivoting movements of the two telescopes (1) about their pivot axes (8) are coupled and the two telescopes (1) each adopt the same convergence angle, and **in that** the convergence setting device for the coupled pivoting movement of the two telescopes (1) has a first set wheel (14) connected to an eccentric (16) which displaces the telescopes along the guideways (6), and a coupling device for coupling the setting of the convergence angle (11) of the telescopes (1) with the distance setting of the said telescopes, wherein for each telescope (1) at least one control cam (22) is provided, which control cam is adjoined by a control pin (23), displaceable in the direction of the optical axis (25) in dependence on the convergence angle (11) of the telescopes (1), and the control pin (23) is connected to the objective (2) of each telescope (1) which is displaceable along the optical axis (25).

**2.** Binocular telescopic magnifying spectacles according to Claim 1,
**characterised in that** sliding shoes (7) are connected to the telescopes (1), which sliding shoes are displaceable along the guideways (6).

**3.** Binocular telescopic magnifying spectacles according to Claim 1 or Claim 2, **characterised in that** an interpupillary distance setting device is provided for setting the distance apart of the two pivot axes of the telescopes (1), which device has a second set wheel (12) connected to nuts in which draw-in bolts (13) rigidly connected to the guideways (6) and having opposing threads are mounted.

**4.** Binocular telescopic magnifying spectacles according to one of Claims 1 to 3, **characterised in that** the telescopes (1) containing the objective (2) and the ocular (4) are arranged so as to be displaceable in a preferably parallelepiped-shaped holder (31) which has a longitudinal slot recess (34) extending in the axial direction of the telescopes (1) accommodated therein, in which a control pin (23) is provided which is connected to a tube (33) having the objective (2), and this control pin (23) projects into two control slotted links (43, 46), of which one control slotted link (46) is displaceably mounted in the centre plane (26) of the telescopic magnifying spectacles and the other control slotted link (43) at right angles thereto, the two control slotted links (43, 46) crossing one another.

**5.** Binocular telescopic magnifying spectacles according to Claim 4,
**characterised in that** the control slotted link (46) displaceable along the centre plane (26) of the telescopic magnifying spectacles extends at right angles to this centre plane (26) and the two other control slotted links (43) allocated to the two telescopes (1) converge from the outside towards the centre plane (26).

6. Binocular telescopic magnifying spectacles according to Claim 4 or 5, **characterised in that** the control slotted links (43) extending so as to converge towards the centre plane (26) are pivotable in their plane in order to vary their angular position in relation to the centre plane (26).

7. Binocular telescopic magnifying spectacles according to Claim 4, **characterised in that** the sliding shoe (7) is arranged on the side of the holder (31) directed away from the longitudinal slot recess (34).

8. Binocular telescopic magnifying spectacles according to one of Claims 1 to 7, **characterised in that** the holders (31) are each accommodated by a U-shape moulding (39), the vertical bars (40) of these mouldings (39) which connect the side-pieces (41, 42) of these mouldings being directed towards one another, and the one control slotted link (43) extending so as to converge being provided in each upper side-piece (41) and the arcuate guideway (6) in which the sliding shoe (7) of the holder (31) is located being provided in the lower side-piece (42).

9. Binocular telescopic magnifying spectacles according to Claim 8, **characterised in that** the side-pieces (42) of each of the U-shape mouldings (39) having the arcuate guideway (6) is located in a groove-like depression (52) of a housing shell (28) accommodating the telescopic magnifying spectacles, which depression extends at right angles to the centre plane (26) and serves as a guide.

10. Binocular telescopic magnifying spectacles according to Claim 8 or 9, **characterised in that** toothed racks (44) located parallel to one another and at right angles to the centre plane (26) are connected to each of the U-shape mouldings (39), a pinion (51) being located therebetween.

11. Binocular telescopic magnifying spectacles according to Claim 4, **characterised in that** the control slotted link (46) displaceable in the centre plane (26) and extending at right angles thereto is provided in a strip-shape component (47) which has in its centre part a toothed strip (49) extending in the displacement direction of the control slotted link (46), which toothed strip meshes with a rotatable pinion (50) mounted in a housing part, and the lateral edges (48) of the strip-shape component (47) extending parallel to the toothed strip (49) are bent up and are accommodated by guide grooves recessed in a housing part (27).

12. Binocular telescopic magnifying spectacles according to Claim 1, **characterised in that** the objective (2) and optionally an inverting prism (3) of the telescope (1), on the one hand, and the ocular (4) on the other hand, are arranged in separate tubes (32, 33) accommodated by the holder (31).

13. Binocular telescopic magnifying spectacles according to Claim 12, **characterised in that** the tubes (32) having the oculars (4) are displaceable in relation to the holder (31) by means of a rack and pinion drive.

14. Binocular telescopic magnifying spectacles according to Claim 13, **characterised in that** the tube (32) having the ocular (4) has on its exterior side a rack (37) extending in the axial direction of the tube (32) and located in a slot-like recess (36) of the holder (31), which rack meshes with a pinion (54) rotatably mounted on the holder (31).

15. Binocular telescopic magnifying spectacles according to Claim 1, **characterised in that** the pivot axes (8) of the telescopes (1) are at a distance (d) of between 5 and 20 mm from the ocular exit pupil (9).

16. Binocular telescopic magnifying spectacles according to Claim 15, **characterised in that** the pivot axes (8) of the telescopes (1) are at a distance (d) of about half the eye diameter (D), preferably 13 mm, from the ocular exit pupil (9).

17. Binocular telescopic magnifying spectacles according to Claim 15, **characterised in that** the ocular exit pupil (9) is located about 10 mm to 20 mm outside the ocular (4) of each telescope (1).

**18.** Binocular telescopic magnifying spectacles according to one of Claims 1 to 17, **characterised in that**, between the objective (2) and the inverting prism (3), a lens (24), preferably a positive lens, is pivotable into the beam path.

**19.** Binocular telescopic magnifying spectacles according to Claim 18, **characterised in that** coupled with the lens (24), a focal distance-compensating piece may be pivoted-in to adjust the position of the objective (2) along the optical axis such that the distance of the telescopes (1) remains set the same.

**20.** Binocular telescopic magnifying spectacles according to one of Claims 1 to 19, **characterised in that** the inverting prisms (3) are mounted so as to be displaceable axially, and a coupling device for coupling the axial position of the inverting prisms (3) with the convergence angle (11) or the distance setting is provided.

**21.** Binocular telescopic magnifying spectacles according to Claim 20, **characterised in that** the coupling device is a rigid connection between the objective (2) and the inverting prism (3).

**22.** Binocular telescopic magnifying spectacles according to one of Claims 1 to 20, **characterised in that** the oculars (4) have a substantially rectangular cross-section, preferably in the ratio of length to width of 4 : 3.

**23.** Binocular telescopic magnifying spectacles according to Claim 22, **characterised in that** at least some of the field stops or aperture stops, preferably all, have a rectangular shape, preferably in the ratio of length to width of 4 : 3.


**Revendications**

**1.** Lunette grossissante binoculaire, dont les deux lunettes (1) présentent, respectivement, un objectif (2), éventuellement un prisme redresseur (3), et un oculaire (4) et qui sont montées à pivotement autour d'axes pivotants parallèles dans un plan commun, dans laquelle lesdits deux axes pivotants (8) des lunettes (1) se trouvent, respectivement, à l'extérieur des lunettes (1) et sur le côté, opposé aux lunettes (1), de la pupille (9) de sortie de l'oculaire à une distance (d) de la pupille (9) de sortie de l'oculaire, qui est plus petite que le diamètre (D) de l'oeil, et les axes pivotants (8) des lunettes (1) croisent, respectivement, leurs axes optiques (25) et les deux lunettes (1) peuvent être déplacées, respectivement, sur des voies de guidage en arc de cercle (6), dont les centres coïncident avec les axes pivotants (8) des lunettes (1), les axes optiques (25) des lunettes (1) étant situés, respectivement, radialement par rapport aux voies de guidage (6), **caractérisée en ce que** les pivotements des deux lunettes (1) autour de leurs axes pivotants (8) sont couplés et les deux lunettes (1) adoptent, respectivement, le même angle de convergence et **en ce que** le dispositif de réglage de convergence pour le pivotement couplé des deux lunettes (1) présente une première roue de réglage (14), qui est reliée à une excentrique (16), qui déplace les lunettes le long des voies de guidage (6), et il est prévu un dispositif de couplage pour coupler le réglage de l'angle de convergence (11) des lunettes (1) avec le réglage de distance de celles-ci, où, pour chaque lunette (1), il est prévu au moins une came de commande (22), sur laquelle s'applique une tige de commande (23) déplaçable dans la direction de l'axe optique (25) en fonction de l'angle de convergence (11) des lunettes (1) et la tige de commande (23) est reliée à l'objectif (2) de la lunette respective (1) déplaçable le long de l'axe optique (25).

**2.** Lunette grossissante binoculaire selon la revendication 1, **caractérisée en ce que** des coulisseaux (7), qui peuvent être déplacés le long des voies de guidage (6), sont reliés aux lunettes (1).

**3.** Lunette grossissante binoculaire selon la revendication 1 ou 2, **caractérisée en ce qu'**il est prévu un dispositif de réglage de la distance pupillaire pour régler la distance des deux axes pivotants des lunettes (1), qui présente une seconde roue de réglage (12), qui est reliée par des écrous dans lesquels sont ajustés des vis de traction (13) reliées de manière rigide aux voies de guidage (6) et avec des filets opposés.

**4.** Lunette grossissante binoculaire selon l'une quelconque des revendications 1 à 3, **caractérisée en ce que** les lunettes (1) contenant l'objectif (2) et l'oculaire (4) sont aménagées de manière à pouvoir se déplacer dans un support (31) de préférence parallélépipédique, qui présente une cavité (34) en forme de trou allongé s'étendant dans la direction axiale de la lunette reçue, cavité dans laquelle il est prévu une tige de commande (23) qui est reliée à un tube (33) présentant l'objectif (2), et cette tige de commande (23) fait saillie dans deux coulisses de commande (43, 46), dont la première coulisse (46) est montée dans le plan central (26) de la lunette grossissante et l'autre coulisse de commande (43) est montée de manière à pouvoir se déplacer perpendiculairement à la première, les deux coulisses de commande (43, 46) se croisant.

**5.** Lunette grossissante binoculaire selon la revendication 4, **caractérisée en ce que** la coulisse de commande (46) qui peut se déplacer le long du plan central (26) de la lunette grossissante s'étend perpendiculairement à ce plan central (26) et les deux autres coulisses de commande (43), qui sont imputées aux deux lunettes (1), convergent de l'extérieur vers le plan central (26).

**6.** Lunette grossissante binoculaire selon la revendication 4 ou 5, **caractérisée en ce que** les coulisses de commande (43) s'étendant de manière convergente vers le plan central (26) peuvent pivoter dans leur plan de manière à modifier leur position angulaire par rapport au plan central (26).

**7.** Lunette grossissante binoculaire selon la revendication 4, **caractérisé en ce que** le coulisseau (7) est agencé sur le côté du support (31) opposé à la cavité (24) en forme de trou allongé.

**8.** Lunette grossissante binoculaire selon l'une quelconque des revendications 1 à 7, **caractérisée en ce que** les supports (31) sont respectivement reçus par une pièce moulée en forme de U (39), où ces pièces moulées (39) sont tournées l'une vers l'autre par leurs nervures verticales (40) reliant les joues (41, 42) de ces pièces moulées, la première coulisse de commande (43) s'étendant de manière convergente étant prévue dans la joue supérieure respective (41) et, dans la joue inférieure (42), la voie de guidage en arc de cercle (6), dans laquelle le coulisseau (7) du support (31) se trouve.

**9.** Lunette grossissante binoculaire selon la revendication 8, **caractérisée en ce que** les joues (42) des pièces moulées respectives en forme de U (39) présentant la voie de guidage en forme d'arc de cercle (6) se trouvent dans une cavité (52) en forme de gorge, servant de guide et s'étendant perpendiculairement au plan central (26), d'une enveloppe de boîtier (28) recevant la lunette grossissante.

**10.** Lunette grossissante binoculaire selon la revendication 8 ou 9, **caractérisée en ce que** des crémaillères (44) parallèles l'une à l'autre et perpendiculaires au plan central (26), entre lesquelles se trouve un pignon (51), sont reliées aux pièces moulées respectives en forme de U (39).

**11.** Lunette grossissante binoculaire selon la revendication 4, **caractérisée en ce que** la coulisse de commande (46) déplaçable dans le plan central (26) et s'étendent perpendiculairement à celui-ci est prévue dans une pièce en forme de bande (47), qui présente, dans sa partie centrale, une baguette dentée (49) s'étendant dans la direction de déplacement de la coulisse de commande (46), qui s'engrène sur un pignon rotatif (50) monté dans une partie de boîtier, et les bords latéraux (48) de la pièce en forme de bande (47) s'étendant parallèlement à la baguette dentée (49) sont repliés vers le haut et sont reçus par des gorges de guidage ménagées dans une partie de boîtier (27).

**12.** Lunette grossissante binoculaire selon la revendication 1, **caractérisée en ce que** l'objectif (2) et, éventuellement, un prisme redresseur (3) de la lunette (1), d'une part, et l'oculaire (4), d'autre part, sont aménagés dans des tubes séparés (32, 33) reçus par le support (31).

**13.** Lunette grossissante binoculaire selon la revendication 12, **caractérisée en ce que** les tubes (32) présentant les oculaires (4) peuvent être déplacés par rapport au support (31) au moyen d'un mécanisme denté.

**14.** Lunette grossissante binoculaire selon la revendication 13, **caractérisée en ce que** le tube (32) présentant l'oculaire (4) présente, sur son côté extérieur, une crémaillère (37) s'étendant dans la direction axiale du tube (32) et montée dans une cavité en forme de fente (36) du support (31), ladite crémaillère s'engrenant sur un pignon (54) monté à rotation sur le support (31).

**15.** Lunette grossissante binoculaire selon la revendication 1, **caractérisée en ce que** les axes pivotants (8) des lunettes (1) présentent une distance (d) de la pupille (9) de sortie de l'oculaire entre 5 et 20 mm.

**16.** Lunette grossissante binoculaire selon la revendication 15, **caractérisée en ce que** les axes pivotants (8) des lunettes (1) présentent une distance (d) de la pupille (9) de sortie de l'oculaire d'à peu près la moitié du diamètre (D) de l'oeil, de préférence de 13 mm.

**17.** Lunette grossissante binoculaire selon la revendication 15, **caractérisée en ce que** la pupille (9) de sortie de l'oculaire se trouve à une distance de 10 mm à 20 mm à l'extérieur de l'oculaire (2) des lunettes respectives (1).

**18.** Lunette grossissante binoculaire selon l'une quelconque des revendications 1 à 17, **caractérisée en ce qu'**une lentille (24), de préférence une lentille positive, peut être soumise à un pivotement dans le trajet lumineux entre l'objectif (2) et le prisme redresseur (3).

**19.** Lunette grossissante binoculaire selon la revendication 18, **caractérisée en ce que**, en couplage avec la lentille (24), une pièce de compensation de distance focale peut être soumise à un pivotement pour régler la position de l'objectif (2) le long de l'axe optique de sorte que la distance des lunettes (1) reste réglée à la même valeur.

**20.** Lunette grossissante binoculaire selon l'une quelconque des revendications 1 à 19, **caractérisée en ce que** les prismes redresseurs (3) sont montés de manière à pouvoir effectuer un déplacement axial et il est prévu un dispositif de couplage pour coupler la position axiale des prismes redresseurs (3) avec l'angle de convergence (11) ou avec le réglage de la distance.

**21.** Lunette grossissante binoculaire selon la revendication 20, **caractérisée en ce que** le dispositif de couplage est une liaison rigide entre l'objectif (2) et le prisme redresseur (3).

**22.** Lunette grossissante binoculaire selon l'une quelconque des revendications 1 à 20, **caractérisée en ce que** les oculaires (4) présentent une section transversale sensiblement rectangulaire, de préférence dans le rapport longueur-largeur de 4:3.

**23.** Lunette grossissante binoculaire selon la revendication 22, **caractérisée en ce qu'**au moins une partie des diaphragmes de champ ou des diaphragmes présentent, de préférence, tous une forme rectangulaire, de préférence dans le rapport longueur-largeur de 4:3.

## Fig. 1

Fig. 2

Fig. 7

Fig. 6

Fig. 3

Fig. 4

Fig. 5

Fig. 8

Fig. 10

Fig. 9

Fig. 11

Fig. 12

Fig.13

Fig.14